# EUROPÄISCHE PATENTSCHRIFT

(11) **EP 1 153 040 B1**
(45) Veröffentlichungstag und Bekanntmachung des Hinweises auf die Patenterteilung: **08.06.2005**
(21) Anmeldenummer: 99957311.6
(22) Anmeldetag: 15.11.1999
(51) Int. Cl.: C08B 11/20

(54) **VERFAHREN ZUR HERSTELLUNG NIEDRIGVISKOSER WASSERLÖSLICHER CELLULOSEETHER**
METHOD FOR THE PRODUCTION OF LOW-VISCOUS WATER-SOLUBLE CELLULOSE ETHERS
PROCEDE POUR PRODUIRE DES ETHERS CELLULOSIQUES HYDROSOLUBLES A BASSE VISCOSITE

(30) Priorität: 27.11.1998 DE 19854770
(43) Veröffentlichungstag der Anmeldung: 14.11.2001
(73) Patentinhaber: Wolff Walsrode AG, 29655 Walsrode (DE)
(72) Erfinder: SCHLESIGER, Hartwig, D-29683 Fallingbostel (DE)
(74) Vertreter: Lütjens, Henning
(86) Internationale Anmeldenummer: PCT/EP1999/008779
(87) Internationale Veröffentlichungsnummer: WO 2000/032636

(56) Entgegenhaltungen:
- DE-A- 1 543 116
- DE-A- 2 016 203
- DE-A- 3 009 149
- GB-A- 953 944
- US-A- 5 480 984

## Beschreibung

Die technologischen Eigenschaften der Celluloseether hängen stark von der Viskosität ihrer Lösungen ab. Während hauptsächlich mittelviskose Celluloseether, d.h. solche mit mittlerem Molekulargewicht verarbeitet werden, haben jedoch auch hoch- und niedrigviskose Celluloseether Bedeutung erlangt.

Niedrigviskose Celluloseether, die im Vergleich zu mittel- und hochviskosen Celluloseethern auch ein niedriges Molekulargewicht haben, sind grundsätzlich auf zwei verschiedenen Wegen herstellbar. Entweder geht man von einer niedermolekularen Alkalicellulose aus und verethert diese, oder man baut einen fertigen Celluloseether ab bis zu dem gewünschten Molekulargewicht.

Geht man von einer niedermolekularen Alkalicellulose aus und stellt hieraus durch Veretherung einen Celluloseether her, so wird der nachfolgende Reinigungsprozess erschwert. Der Celluloseether enhält einen erheblichen Kurzkettenanteil, welcher mit den Waschmedien stark quillt bzw. ausgewaschen wird.

Der als zweite mögliche Methode erwähnte Abbau höhermolekularer Celluloseether zu niedermolekularen, niedrigviskosen Celluloseethern kann durch die Einwirkung von Oxidationsmitteln, wie z.B. Hypochlorit oder Wasserstoffperoxid erfolgen.

Der oxidative Abbau höherviskoser Celluloseether kann im Anschluß an den Reinigungsprozeß durchgeführt werden. Somit werden Auswaschverluste und Schwierigkeiten während der Wäsche vermieden.

Nachstehend aufgelistete Schriften geben einen Überblick über die derzeit angewandten Verfahren zum Abbau höherviskoser Celluloseether nach der Veretherung und Wäsche:

Die DE 2 016 203 von The Dow Chemical Co. beansprucht ein Verfahren zur Viskositätsemiedrigung von Celluloseethern mit Wasserstoffperoxid. Bei diesem Verfahren wird ein im wesentlichen trockener, frei fließender Celluloseether mit einem Wassergehalt von weniger als 5 Gew.% mit 10 - 50%iger Wasserstoffperoxidlösung gemischt und die erhaltene Mischung auf 50 bis 150°C erhitzt.

Die DE 1 543 116 der Kalle AG beansprucht ein Verfahren zur Herstellung niedrigviskoser Celluloseether durch oxidativen Abbau höherviskoser Celluloseether mit Wasserstoffperoxid. Dieses Verfahren ist dadurch gekennzeichnet, daß man einen höherviskosen Celluloseether mit einer wässrigen Lösung von Wasserstoffperoxid mischt, wobei der Wassergehalt des Gemisches 75 Gew.-%, bezogen auf die Gesamtmenge, nicht überschreitet. Das Gemisch wird dann bei Temperaturen von 100°C - 250°C bis zum Verbrauch des Wasserstoffperoxids getrocknet. Der Verlust der Feuchtigkeit und des Wasserstoffperoxids verlaufen hierbei nahezu parallel der Abnahme der Viskosität.

Diesen Verfahren ist gemeinsam, daß direkt aus der Abbaureaktion ein niedrigviskoser Cellulosether in trockener Pulver- oder Granulatform resultiert. Entweder wird vor der Abbaureaktion getrocknet und bei nur geringen Feuchtegehalten gearbeitet, oder aus einem feuchten Produkt hin zu geringen Feuchtegehalten gearbeitet. Der Viskositätsverlust verläuft dann nahezu parallel dem Feuchtigkeitsverlust.

Aufgabe war es, ein Verfahren zur Verfügung zu stellen, welches die Viskositätseinstellung direkt nach der Wäsche des Celluloseethers so erlaubt, daß die nachfolgende Trocknung, Formgebung (Mahlung, Granulierung) und Abmischung nicht beeinflußt wird, und daß die Abbaureaktion nicht durch die nachfolgenden Verfahrensschritte Trocknung, Formgebung (Mahlung, Granulierung) und Abmischung beeinfluß wird.

Diese Aufgabe konnte dadurch gelöst werden, dass man höherviskose Celluloseether aus der Gruppe Methylcellulose, Methylhydroxyethylcellulose, hydrophob modfizierte Methylhydroxyethylcellulose, Methylhydroxypropylcellulose, Hydroxypropylcellulose oder Gemische davon als wasserfeuchte Filterkuchen dieser Celluloseether, wie sie nach der Wäsche und Separation vorliegen, intensiv mit einer wässrigen Lösung von Wasserstoffperoxid bei Temperaturen von 65 bis 125°C mischt, wobei das Mischungsverhälnis so gewählt wird, dass der Gehalt an Wasserstoffperoxid, bezogen auf den trockenen Celluloseether 0,1 bis 10 Gew.-% beträgt, der Feststoffgehalt des Gemisches 35 bis 80 Gew.-%, bezogen auf die Gesamtmenge des Gemischs, beträgt und man das Gemisch dann bei Temperaturen von 65 bis 125°C, bis zum Verbrauch von mindestens 90 % des Wasserstoffperoxides bewegt hält.

Durch diese Verfahren wird ein niedrigviskoser wasserlöslicher Celluloseether erhalten. Überraschenderweise werden die nachfolgenden Verfahrenschritte zur Herstellung des verkaufsfertigen Celluloseethers wie Trocknung, Formgebung (Mahlung, Granulierung) und Abmischung nicht durch die Abbaureaktion beeinflußt. Der Feuchte- und Mahlgrad kann unabhängig von der Viskositätserniedrigung eingestellt werden.

Unter niedrigviskosen Celluloseethern sollen hier Celluloseether verstanden werden, deren 2 %ige wässrige Lösungen bei 20°C und einem Schergefälle von 2,55 s⁻¹ Viskositäten von 2 bis 400, insbesondere 2 bis 100 mPa*s aufweisen (Haake Rotovisko). Unter einem höherviskosen Celluloseether soll hier ein Celluloseether verstanden werden, dessen 2 %ige wässrige Lösungen bei 20°C und einem Schergefälle von 2,55 s⁻¹ eine Viskosität von 100 bis 100.000, vorzugsweise 400 bis 20.000 mPa*s, aufweist. Dabei beträgt die durch das erfindungsgemäße Verfahren bewirkte Viskositätsemiedrigung im Endprodukt verglichen mit dem Ausgangsmaterial vorzugsweise mindestens 50 %, insbesondere mindestens 70 % und ganz besonders bevorzugt mindestens 98 %. ethylcellulose oder Methylhydroxypropylcellulose. Es kommen wasserfeuchte Filterkuchen dieser Celluloseether, wie sie nach der Wäsche und Separation vorliegen, zum Einsatz.

Das Verfahren kann bequem in den üblichen Produktionsablauf der Herstellung eines Celluloseethers eingefügt werden. Das höherviskose Ausgangsmaterial wird nach der Wäsche bis zu einem Trockengehalt von 25 bis 80 Gew.-% bezogen auf das Gesamtgewicht, abgeschleudert.

Anschließend wird eine wässrige Lösung von Wasserstoffperoxid bei Temperaturen von 65 - 125°C, gegebenenfalls stufenweise, intensiv eingemischt, wobei das Mischungsverhälnis so gewählt wird, daß der Gehalt an Wasserstoffperoxid, bezogen auf die Trockensubstanz, 0,1 - 10 Gew.-% beträgt, der Trockengehalt des Gemisches 25 Gew.-%, bezogen auf die Gesamtmenge, nicht unterschreitet. Man hält das Gemisch dann bei Temperaturen von 65 - 125°C, bevorzugt Temperaturen von 75 - 100°C bis zum Verbrauch von mindestens ca. 90 %, vorzugsweise von mindestens 95 % des eingesetzten Wasserstoffperoxides, bewegt. Ganz besonders bevorzugt ist es, das Gemisch bis zum völligen Verbrauch des Wasserstoffperoxides bewegt zu halten. Die weiteren Verfahrensschritte wie Additivierung, Vernetzung mit Dialdehyden, Verdichtung, Trocknung und Mahlung können dann in gewohnter Weise durchgeführt werden.

In dem Verfahren wird ein höhermolekularer Celluloseether mit einem Trockengehalt von 35 - 80 Gew.-%, besonders bevorzugt von 40 - 55 Gew.-% bezogen auf die Gesamtmenge, eingesetzt.

Zum Abbau des höherviskosen Celluloseethers werden 0,1 bis 10 Gew.-% Wasserstoffperoxid, bezogen auf den trocknen Celluloseether, eingesetzt, bevorzugt wird man mit 0,2 bis 2,5 Gew.-%, besonders bevorzugt mit 0,5 bis 1,8 Gew.-% Wasserstoffperoxid, bezogen auf den trockenen Celluloseether, arbeiten.

Aus der Abbaureaktion resultieren je nach Ausgangsmaterial Produkte, deren 2 gew.-%ige wässrige Lösungen saure pH-Werte von 3 bis 5 aufweisen. Es hat sich hier als sinnvoll erwiesen, vor, während oder nach der Abbaureaktion, in jedem Fall jedoch vor jedem weiteren Verarbeitungsschritt wie Trocknung oder Formgebung, die Einstellung des pH-Wertes der Produkte durchzuführen. Besonders gute Ergebnisse werden erzielt, wenn die Einstellung des pH-Werts nach der Abbaureaktion vorgenommen wird. Die Einstellung des pH-Werts wird mit wässrigen Lösungen von Salzen vorgenommen, die einen pH-Wert von 5 bis 12 besitzen und gegebenenfalls vollständig oder in Teilen das erforderliche Wasserstoffperoxid enthalten. Diese Lösungen werden in solchen Mengen dem Reaktionsgemisch zugesetzt, daß der pH-Wert des Gemischs nach der Zugabe auf größer 4,5, vorzugsweise auf 6 bis 7 eingestellt ist. Vorteilhafterweise werden wässrige Lösungen von Natriumdihydrogenphosphat, Dinatriumhydrogenphosphat, Trinatriumphosphat, Dinatriumcarbonat und Natriumhydrogencarbonat oder wässrige Lösungen von Gemischen dieser Salze eingesetzt. Ebenso können Alkalisalze schwacher Säuren wie insbesondere die der Zitronensäure oder Bernsteinsäure in Form von wässrigen Pufferlösungen eingesetzt werden.

Ein Vorteil des beanspruchten Verfahrens liegt darin, daß hier der eigentliche Molekulargewichtsabbau vollständig von einer nachfolgenden Trocknung entkoppelt ist. Dieses hat den Vorteil, daß beliebige Trocknungsaggregate mit unterschiedlichen Verweilzeitverhalten der zu trocknenden Celluloseetherpartikeln eingesetzt werden können, ohne daß ein Einfluß auf die Abbaureaktion eintritt. Des weiteren ist nur ein Aggregat, der Mischer, in welchem die Abbaureaktion durchgeführt wird, von den korrosiven Eigenschaften des eingetragenen Wasserstoffperoxids betroffen. Insbesondere ist es möglich, Additive und Modifikatoren im Anschluß an die Abbaureaktion, jedoch vor der Trocknung in den lösungsmittelfeuchten (z.B. wasserfeuchten) Celluloseether, einzutragen. Hier sei speziell die Gruppe der Dialdehyde (wie z.B. Glyoxal) erwähnt. Diese Verbindungen werden zur Herstellung lösungsverzögerter Celluloseether eingesetzt. Ihr Einsatz zusammen mit dem für die Abbaureaktion benötigten Wasserstoffperoxid verbietet sich aufgrund ihrer Oxidationsempfindlichkeit. Auch ist es möglich, nach der Abbaureaktion und vor der Trocknung oligomere oder polymere oxidationsempfindliche Substanzen (z.B. Polysaccharide, Polysaccharidether, Polyvinylalkohol, Polyester, Polyamide) einzumischen.

Die nachfolgenden Beispiele sollen die vorliegende Erfindung weiter erläutern.

### Beispiele 1-4

Jeweils 5 kg Methylhydroxyethylcellulose mit einem Gehalt an Methoxygruppen von 24,2 - 30,5 % und einem Gehalt an Hydroxyethoxygruppen von 7.5 - 14.8 % und einem Feuchtegehalt von 50 - 53 Gew.-%, bezogen auf die Gesamtmenge und mit einer in der folgenden Tabelle angegebenen Viskosität, gemessen an 2 gew.-%igen wässrigen Lösungen bei 20°C bei einem Schergefälle von 2,55 s⁻¹ (Haake Rotovisko), wurden mit 800 ml wässriger Wasserstoffperoxidlösung besprüht. Das so erhaltene Gemisch wurde 6 Stunden bei 75°C bewegt gehalten und anschließend getrocknet.

Die jeweils angewandte Wasserstoffperoxidmenge, die Ausgangsviskosität und die Endviskosität ist aus der Tabelle zu entnehmen. Die Mengenangaben beziehen sich auf die trockene Methylhydroxyethylcellulose.

| Lfd. Nr. | Ausgangsviskosität (mPa*s) | H₂O₂ Gew.-% | Zugabe Endviskosität (mPa*s) |
|---|---|---|---|
| 1 | 7.100 | 0,5 | 134 |
| 2 | 7.100 | 1,0 | 70 |
| 3 | 7.100 | 1,5 | 21 |
| 4 | 400 | 1,5 | 6 |

### Beispiele 5-7

Jeweils 5 kg Methylhydroxyethylcellulose mit einem Gehalt an Methoxygruppen von 21,4 - 26,1 % und einem Gehalt an Hydroxyethoxygruppen von 5,9 - 9,8 % und einem Feuchtegehalt von 52 Gew.-%, bezogen auf die Gesamtmenge und mit einer in der folgenden Tabelle angegebenen Viskosität, gemessen an 2 gew.-%igen wässrigen Lösungen bei 20°C bei einem Schergefälle von 2,55 s⁻¹ (Haake Rotovisko), wurden mit 500 ml wässriger Wasserstoffperoxidlösung besprüht. Die angewandte Wasserstoffperoxidmenge betrug 1 Gew.-%, bezogen auf die trockene Methylhydroxyethylcellulose. Das so erhaltene Gemisch wurde bis zum Verbrauch des Wasserstoffperoxid bewegt gehalten und anschließend getrocknet.

Die jeweiligen Reaktionstemperaturen, Reaktionszeiten, die Ausgangsviskositäten und die Endviskositäten sind aus der Tabelle zu entnehmen.

| Lfd. Nr. | Ausgangsviskosität (mPa*s) | Endviskosität (mPa*s) | Reaktionstemperatur (°C) | Reaktionszeit (h) |
|---|---|---|---|---|
| 5 | 6.000 | 40 | 75 - | 6 |
| 6 | 6.000 | 34 | 85 | 5 |
| 7 | 6.000 | 36 | 95 | 3 |

### Beispiele 8-10

Jeweils 5 kg Methylhydroxyethylcellulose mit einem Gehalt an Methoxygruppen von 21,4 - 26,1 % und einem Gehalt an Hydroxyethoxygruppen von 5,9 - 9,8 % und einem Feuchtegehalt von 52 Gew.-%, bezogen auf die Gesamtmenge und mit einer in der folgenden Tabelle angegebenen Viskosität, gemessen an 2 gew.-%igen wässrigen Lösungen bei 20°C bei einem Schergefälle von 2,55 s⁻¹ (Haake Rotovisko), wurden mit 500 ml wässriger Wasserstoffperoxidlösung besprüht. Das so erhaltene Gemisch wurde 3 Stunden bei 95°C bis zum Verbrauch des Wasserstoffperoxid bewegt gehalten und anschließend mit 250 ml einer wässrigen Löung von Dinatriumhydrogenphosphat und Dinatriumcarbonat besprüht und weitere 60 Minuten gemischt. Anschließend wurde getrocknet.

Die jeweiligen Ausgangsviskositäten und die Endviskositäten, die angewandten Mengen an Dinatriumhydrogenphosphat und Dinatriumcarbonat, sowie die pH-Werte 2 gew.-%iger Lösungen der Produkte und die angewandte Wasserstoffperoxidmenge sind aus der Tabelle zu entnehmen. Die Mengenangaben beziehen sich auf die trockene Methylhydroxyethylcellulose.

| Lfd. Nr. | Ausgangsviskosrtat(mPa*s) | Endviskosität (mPa*s) | Dinatrium-hydrogenphosphat (Gew.%) | Dinatrium-carbonat (Gew.-%) | pH-Werte 2 gew.-%iger wässriger Lösungen | H₂O₂-Zugabe (Gew-%) |
|---|---|---|---|---|---|---|
| 8 | 6.000 | 36 | 0,25 | 0,2 | 5,6 | 1,0 |
| 9 | 6.000 | 29 | 0,25 | 0,3 | 5,9 | 1,0 |
| 10 | 6.000 | 19 | 0,25 | 0,5 | 5,0 | 1,5 |

### Beispiele 11-12

Jeweils 5 kg Methylhydroxyethylcellulose mit einem Gehalt an Methoxygruppen von 24,2 - 30,5 % und einem Gehalt an Hydroxyethoxygruppen von 7,5 - 14,8 % und einem Feuchtegehalt von 50 - 53 Gew.-%, bezogen auf die Gesamtmenge und mit einer in der folgenden Tabelle angegebenen Viskosität, gemessen an 2 gew.-%igen wässrigen Lösungen bei 20°C bei einem Schergefälle von 2,55 s⁻¹ (Haake Rotovisko), wurden mit 800 ml wässriger Wasserstoffperoxidlösung besprüht. Die angewandte Wasserstoffperoxidmenge betrug 1,5 Gew.-% bezogen auf die trockene Methylhydroxyethylcellulose. Zusätzlich enthielt die Wasserstoffperoxidlösung 0,5 Gew.-% (bezogen auf die trockene Methylhydroxyethylcellulose) Trinatriumcitrat. Das so erhaltene Gemisch wurde 5 Stunden bei 90°C bis zum Verbrauch des Wasserstoffperoxid bewegt gehalten und anschließend getrocknet.

Die jeweiligen Ausgangsviskositäten und die Endviskositäten sowie die pH-Werte 2 gew.-%iger Lösungen der Produkte sind aus der Tabelle zu entnehmen.

| Lfd. Nr. | Ausgangsviskosität (mPa*s) | Endviskosität (mPa*s) | pH-Werte 2 gew.-%iger wässriger Lösungen |
|---|---|---|---|
| 11 | 400 | 30 | 4,8 |
| 12 | 7.100 | 90 | 4,7 |

## Patentansprüche

1. Verfahren zur Herstellung niedrigviskoser wasserlöslicher Celluloseether durch oxidativen Abbau höherviskoser Celluloseether mit Wasserstoffperoxid, **dadurch gekennzeichnet, dass** man höherviskose Celluloseether aus der Gruppe Methylcellulose, Methylhydroxyethylcellulose, hydrophob modfizierte Methylhydroxyethylcellulose, Methylhydroxypropylcellulose, Hydroxypropylcellulose oder Gemische davon als wasserfeuchte Filterkuchen dieser Celluloseether, wie sie nach der Wäsche und Separation vorliegen, intensiv mit einer wässrigen Lösung von Wasserstoffperoxid bei Temperaturen von 65 bis 125°C mischt, wobei das Mischungsverhälnis so gewählt wird, dass der Gehalt an Wasserstoffperoxid, bezogen auf den trockenen Celluloseether 0,1 bis 10 Gew.-% beträgt, der Feststoffgehalt des Gemisches 35 bis 80 Gew.-%, bezogen auf die Gesamtmenge des Gemischs, beträgt und man das Gemisch dann bei Temperaturen von 65 bis 125°C, bis zum Verbrauch von mindestens 90 % des Wasserstoffperoxides bewegt hält.

2. Verfahren nach Anspruch 1, **dadurch gekennzeichnet, dass** die Mischung mit der wässrigen Lösung von Wasserstoffperoxid stufenweise erfolgt.

3. Verfahren nach Anspruch 1 oder 2, **dadurch gekennzeichnet, dass** man das Gemisch bei Temperaturen von 75 - 100°C bewegt hält.

4. Verfahren zur Herstellung niedrigviskoser wasserlöslicher Celluloseether nach einem der Ansprüche 1 bis 3, **dadurch gekennzeichnet, dass** 0,1 bis 10 Gew.-% Wasserstoffperoxid, bezogen auf den trockenen Celluloseether, eingesetzt werden.

5. Verfahren zur Herstellung niedrigviskoser wasserlöslicher Celluloseether nach einem der Ansprüche 1 bis 4, **dadurch gekennzeichnet, dass** ein höhermolekularer Celluloseether mit einem Festtoffgehalt von 40 - 55 Gew.-%, bezogen auf die Gesamtmenge aus Celluloseether und Lösungsmittel, eingesetzt wird.

6. Verfahren zur Herstellung niedrigviskoser wasserlöslicher Celluloseether nach einem der Ansprüche 1 bis 5, **dadurch gekennzeichnet, dass** man vor, während oder vorzugsweise nach der Abbaureaktion durch Mischen mit einer wässrigen Lösung, die einen pH von 5 bis 12 hat und gegebenenfalls das erforderliche zur Abbaureaktion Wasserstoffperoxid gelöst enthält, den pH Wert des Gemisches auf größer 4,5, einstellt.

7. Verfahren zur Herstellung niedrigviskoser wasserlöslicher Celluloseether nach einem der Ansprüche 1 bis 6, **dadurch gekennzeichnet, dass** es sich bei dem wasserlöslichen Celluloseether um Methylhydroxyethylcellulose oder Methylhydroxypropylcellulose handelt und wasserfeuchte Filterkuchen der Celluloseether, wie sie nach der Wäsche und Separation vorliegen, zum Einsatz kommen.

## Claims

1. Process for the production of low-viscosity water-soluble cellulose ethers by oxidative decomposition of higher-viscosity cellulose ethers with hydrogen peroxide, **characterised in that** higher-viscosity cellulose ethers from the group methyl cellulose, methylhydroxyethyl cellulose, hydrophobically modified methylhydroxyethyl cellulose, methylhydroxypropyl cellulose, hydroxypropyl cellulose or mixtures thereof as water-wet filter cakes of these cellulose ethers, as obtained after washing and separation, are intensively mixed with an aqueous solution of hydrogen peroxide at temperatures of 65 to 125°C, the proportions of the mixture being selected in such a way that the hydrogen peroxide content is 0.1 to 10 wt.% in relation to the dry cellulose ether, the solid content of the mixture is 35 to 80 wt.% in relation to the total quantity of the mixture and the mixture is then agitated continuously at temperatures of 65 to 125°C until 90% at least of the hydrogen peroxide has been spent.

2. Process according to claim 1, **characterised in that** mixing with the aqueous hydrogen peroxide solution is carried out step-by-step.

3. Process according to claim 1 or 2, **characterised in that** the mixture is agitated continuously at temperatures of 75 - 100°C.

4. Process for the production of low-viscosity water-soluble cellulose ethers according to one of claims 1 to 3, **characterised in that** 0.1 to 10 wt.% hydrogen peroxide in relation to the dry cellulose ether are used.

5. Process for the production of low-viscosity water-soluble cellulose ethers according to one of claims 1 to 4, **characterised in that** a higher-molecular cellulose ether with a solid content of 40 - 55 wt.%, in relation to the total quantity of cellulose ether and solvent, is used,

6. Process for the production of low-viscosity water-soluble cellulose ethers according to one of claims 1 to 5, **characterised in that** before, during or preferably after the decomposition reaction, the pH value of the mixture is set at more than 4.5, by mixing it with an aqueous solution which has a pH of 5 to 12 and optionally contains, in solution, the hydrogen peroxide required for the decomposition reaction.

7. Process for the production of low-viscosity water-soluble cellulose ethers according to one of claims 1 to 6, **characterised in that** the water-soluble cellulose ether is methyl hydroxyethyl cellulose, or methyl hydroxypropyl cellulose and water-wet filter cakes of the cellulose ethers, as obtained after washing and separation, are used.

## Revendications

1. Procédé pour la préparation d'éthers cellulosiques solubles dans l'eau, à basse viscosité, par dégradation oxydative d'éthers cellulosiques à haute viscosité par le peroxyde d'hydrogène, **caractérisé en ce que** l'on soumet des éthers cellulosiques à haute viscosité du groupe de la méthylcellulose, de la méthylhydroxyéthylcellulose, de la méthylhydroxyéthylcellulose, à modification hydrophobe de la méthylhydroxypropylcellulose, de l'hydroxypropylcellulose, ou des mélanges de ces éthers, à l'état de gâteaux de filtration humides de ces éthers cellulosiques, tels qu'obtenus après lavage et séparation, à mélange intensif avec une solution aqueuse de peroxyde d'hydrogène à des températures de 65 à 125°C, les proportions de mélange étant choisies en sorte que la teneur en peroxyde d'hydrogène par rapport à l'éther cellulosique sec, représente de 0,1 à 10 % en poids et que la teneur en matières sèches du mélange représente de 35 à 80 % de son poids total puis on maintient le mélange en mouvement à des températures de 65 à 125°C jusqu'à consommation d'au moins 90 % du peroxyde d'hydrogène.

2. Procédé selon la revendication 1, **caractérisé en ce que** la solution aqueuse de peroxyde d'hydrogène est introduite et mélangée par portions.

3. Procédé selon la revendication 1 ou 2, **caractérisé en ce que** le mélange est maintenu en mouvement à des températures de 75 à 100°C.

4. Procédé pour la préparation d'éthers cellulosiques solubles dans l'eau, à basse viscosité, selon l'une des revendications 1 à 3, **caractérisé en ce que** l'on utilise de 0,1 à 10 % en poids de peroxyde d'hydrogène par rapport à l'éther cellulosique sec.

5. Procédé pour la préparation d'éthers cellulosiques solubles dans l'eau, à basse viscosité, selon l'une des revendications 1 à 4, **caractérisé en ce que** l'on part d'un éther cellulosique à haut poids moléculaire, à une teneur en matières solides de 40 à 55 % en poids, par rapport au poids total de l'éther cellulosique et du solvant.

6. Procédé pour la préparation d'éthers cellulosiques solubles dans l'eau, à basse viscosité, selon l'une des revendications 1 à 5, **caractérisé en ce que** avant, durant ou de préférence après la réaction de dégradation, on règle le pH du mélange à une valeur supérieure à 4,5 par addition et mélange d'une solution aqueuse qui a un pH de 5 à 12 et contient le cas échéant en solution le peroxyde d'hydrogène nécessaire à la réaction de dégradation.

7. Procédé pour la préparation d'éthers cellulosiques solubles dans l'eau, à basse viscosité, selon l'une des revendications 1 à 6, **caractérisé en ce que** l'éther cellulosique soluble dans l'eau consiste en méthylhydroxyéthylcellulose ou méthylhydroxypropylcellulose et **en ce que** l'on part de gâteaux de filtration humides des éthers cellulosiques tels qu'obtenus après lavage et séparation.
